# EUROPEAN PATENT APPLICATION

(11) **EP 4 686 679 A1**
(43) Date of publication of application: **04.02.2026**
(21) Application number: 25192752.1
(22) Date of filing: 30.07.2025
(51) Int. Cl.: B65G 69/00

(54) **CHOCK DEVICE FOR VEHICLES AND TRAILERS IN LOADING AND UNLOADING DOCKS**

(30) Priority: 30.07.2024 ES 202430644
(71) Applicant: Burgos Quero, Juan, 08520 Les Franqueses del Vallès (ES)
(72) Inventor: Burgos Quero, Juan, 08520 Les Franqueses del Vallès (ES)
(74) Representative: Ponti & Partners, S.L.P

(57) **Abstract**

The present invention relates to a vehicle and trailer chock device in loading and unloading docks to prevent the movement thereof from their position with respect to the dock while said loading and unloading actions are performed. The present invention advantageously comprises a carriage of the chock device that moves on a guide element (100) formed by a metal profile, preferably of open structural type taking advantage of the fact that all its faces are external and accessible for the coupling of the support systems and damping system, its configuration on said faces of the metal profile being advantageous and its great robustness, resistance and no need-for modification for the coupling of the carriage of the chock device.

## Description

The present invention relates to a chock device for vehicles and trailers in loading and unloading docks to prevent the movement thereof from their position with respect to the dock while said loading and unloading actions are performed.

### Background of the invention

Various mechanical chock devices of trucks and their trailers are known, and therefore form part of the state of the art. These devices move along a guide installed for the parking of vehicles on the dock, until they are anchored in a certain position, which must coincide with a point of anchoring of the chock on said guide.

Usually, the anchoring points of the known chocks are distributed along the guide discreetly, by way of holes in the guide element that need to be drilled and the use of pins to be fixed in said holes, with the devices with the greatest adjustment possibilities having a distance between them that usually ranges between 5 and 10 cm so it is quite likely that the chock does not coincide in its anchoring point with the wheel of the vehicle or trailer to be restrained in the loading and unloading position.

Chocks are also known with a displacement system on a toothed element, rack type, which allows a finer discrete regulation of the anchoring position, as is the case with European patent application 17382095.2.

In known chocks with this type of movement on a toothed element, this toothed element whereon the chock moves is installed on a closed support, such as a cylindrical element, which is conventionally used for guiding the truck parking in the loading dock and which is installed on the floor of the loading and unloading dock. This closed configuration of the guide element has the drawback of the few stable possibilities of installing said toothed element on the closed guide element, in the most typical cylindrical cases, and the need to incorporate complementary longitudinal structural elements, usually by way of ribs, to support and stabilise the movement of the carriage on the guide element.

On the other hand, when the displacement and/or the actuation of the locking element of the chock is motorised, electric motors are conventionally used that allow the displacement of said chock on the toothed element of the guide element fixed in the loading and unloading dock. These electric displacement systems have as a drawback the high operating speeds due to the ratio of the reducers that are applied that are conventionally from 1 to 4, too high to be able to conveniently regulate the displacement of the chock.

With all of this, the new configuration of a chock that has a flexible system for regulating the speed of travel is necessary, as well as its installation on a guide element that maximises its stability, robustness and structural strength without having to be modified with new structural elements for its correct support and stability in its operation.

### Description of the invention

The objective of the present invention is to provide a chock device for vehicles and trailers in loading and unloading docks, according to the independent claims provided, which manages to resolve the aforementioned drawbacks, presenting the advantages of a chock device for vehicles and trailers that allows the manual or motorised use of its carriage and its restraint system, its movement being possible on a guide element whereon the carriage moves with advantageous structural properties.

In accordance with the indicated objectives, and according to a first aspect, the present invention provides a chock device for vehicles and trailers in loading and unloading docks, which comprises a carriage that moves along a guide element, wherein the guide element is installed on said loading and unloading docks, wherein the carriage comprises an arm-like restraint system that is configured so that it passes from a retracted position of non-interaction with the vehicle to be restrained to an extracted position that is interposed in the path of said vehicle to be restrained, locking the movement of the vehicles in their loading and unloading position, preferably as an arm or restraining element of the position of the vehicle and/or trailer.

Advantageously, the chock device is formed by the carriage configured to be displaced on the guide element of the chock device, where the guide element is formed by a metal profile.

Preferably according to a possible embodiment of the invention, this metal profile is an open profile of structural type comprising two flanges with appreciably horizontal surfaces as horizontal outer or inner faces of the open metal profile of structural type, separated by a single vertical element by way of a web of the open metal profile of structural type, with both accessible faces of said web of the vertical element, wherein this web of the vertical element joins the two or more appreciably horizontal surfaces. This configuration of the metal profile allows the movement of the carriage in a manual or motorised manner, providing the assembly with stability, robustness and resistance superior to devices with guide elements of cylindrical or rectangular structure.

Also advantageously, a discrete carriage positioning and displacement system is installed on the metal profile that forms the guide element, which comprises a fine adjustment toothing, threading or the like where the carriage has a displacement system complementary to the discrete positioning and displacement system, which is configured to advance or retreat in said discrete positioning and displacement system, having a carriage position locking system in the discrete positioning and displacement system.

Also advantageously, the carriage comprises a damping system displaceable with the same carriage acting in a damped manner on the at least one appreciably vertical surface of the metal profile of the guide element.

Also advantageously, the carriage comprises a bearing support and stabilisation system on at least one of the appreciably horizontal surfaces of the metal profile. This face preferably corresponds to the upper face of the flange which has a greater width in said horizontal plane.

With this configuration it is possible to have a chock device that thanks to a guide element based on a metal profile, preferably of open structural type, allowing the adaptation of the discrete positioning and displacement system, as well as a possible damping system correcting external pressures, all in a simple, safe and effective way.

By way of clarification, when elements of the invention are indicated disposed in appreciably horizontal or vertical positions, this reference should be understood as the installation of the device on the ground, the guide element having a longitudinal disposal appreciably parallel to the installation surface. Any change in this mode of installation must be transferred to the provisions indicated, being considered technically equivalent.

Another necessary clarification is the determination of the outer or inner faces of the open profile, wherein reference is made, in the case of outer faces or surfaces, to the externally disposed surfaces not being included in the area between the two end flanges.

Also by way of clarification, the carriage is understood to be the part of the chock device displaceable along the guide element and comprising at least the removable restraint system.

According to a preferred embodiment of the invention, the guide element is formed by an open metal profile of the standardised structural type of type H, I or U. These types of standardised open profiles that comprise a multitude of variants according to dimensions, shapes and thicknesses (IPN, IPE, HEB, HEA, etc.), allow having a guide element that by themselves provide support and stabilisation surfaces, installation surfaces of the elements that allow displacement, etc., with a minimum actuation and a minimum cost as they are standardised profiles and of wide commercial offer, also providing a great structural resistance, robustness and stability of the assembly against the pressures exerted externally by the vehicle on the chock restraint system.

All these standard open profiles, and the non-standard ones that are usable for this preferred embodiment of the invention, comprise at least:
- two horizontal flanges, which provide the profile with at least two outer horizontal surfaces, i.e. external access to said surfaces having no limitation on their width of the web of the profile, and provide the corresponding inner horizontal surfaces of said two horizontal flanges.
- a vertical web joining the two horizontal flanges, which provide the profile with two exterior vertical surfaces accessible to both sides of said vertical web.

According to one possible embodiment of the invention, the carriage is configured to be displaced manually by the discrete positioning system. The mode of displacement and locking of the carriage in this manual configuration, in a possible non-limiting configuration of the present invention, is similar to that disclosed in European Patent Application 17382095.2. As indicated below, the configuration of the invention when it is motorised, allows with the simple elimination of hydraulic or electric motors, to be able to perform its manual use, with hardly any modifications.

According to another possible embodiment of the invention alternative to the previous one, the carriage displacement system comprises a traction element in complementary collaboration with the discrete positioning and displacement system, which is configured to advance or retreat in said discrete positioning and displacement system by means of a first reversible hydraulic motor.

According to another possible embodiment of the invention alternative to the two previous ones, the carriage displacement system comprises a traction element in complementary collaboration with the discrete positioning and displacement system, which is configured to advance or retreat in said discrete positioning and displacement system by means of a first reversible electric motor.

By way of non-limiting example, these traction systems with reversible motors, electric or hydraulic, can comprise a pinion or toothed or threaded wheel or similar that works collaboratively and complementarily with the discrete positioning and displacement system, allowing the rotation of the reversible motor to be transmitted to said traction system and displacing the carriage on the discrete fine positioning system in both directions.

These motorised or manual carriage configurations, on these types of possible profiles, allow the carriage to be placed on the left or right hand side with minimal changes, such as the rotation of the carriage and the direction of the locking rack, thanks to the fact that in the motorised case the possible motors of the traction system are reversible motors.

With regard to the movement of the restraint system, between the retracted and extracted positions, this movement can also be performed in the three alternative ways mentioned for the movement of the carriage:
- displacement of the restraint system performed by a second reversible hydraulic motor; or
- displacement of the restraint system performed by a second reversible electric motor; or
- displacement of the restraint system performed manually.

According to a preferred, but non-limiting example of operation, in the case of motorised displacement of the restraint system, said restraint system is displaced by the interaction of a toothing, threading, rack or similar of said movable restraint system, and a traction element, formed by a pinion or toothed or threaded wheel complementary to the toothing, threading or similar driven by the second hydraulic or electric motor.

According to an embodiment of the restraint system, this restraint system comprises a locking element of the extracted position thereof based on an electromagnetic bolt configured to fit in a slot or opening of the restraint system. The system that is preferably installed in the systems with motorisation of the movement of the restraint system, fixes the position of the removable arm, bolt or the like, when it reaches its position of restraint of the wheel of the vehicle to prevent its involuntary retraction. This action is governed by a manual command or by the control system of the chock device in an automated manner according to the detection of the position of the plunger, arm or the like, as well as the status of the loading and/or unloading process.

With respect to the embodiments of configuration of displacements of the carriage and/or restraint system by means of a hydraulic motor, the chock device comprises a hydraulic assembly that feeds hydraulic fluid to a solenoid valve block configured to supply hydraulic fluid to the first and/or second reversible hydraulic motor, according to operating configuration parameters of the control system.

Common to any of the embodiments above, the carriage comprises a carriage position locking element, which is configured by way of a pedal, pad or the like, which fits into a discrete fastening system, by way of a rack, disposed independently of the discrete positioning system for positioning and displacement of the carriage and which is configured to be anchored in this discrete fastening system preventing the movement of the carriage at least in the direction of exit of the vehicle it restrains. This allows to independently have the fixation of the position in a toothed system or similar different from the discrete positioning and displacement system.

As an alternative to the latter, the carriage position locking element is configured in a manner analogous to the previous one, but fitting over the discrete positioning and displacement system (103) of the existing carriage (11). This allows only having a single system both for the positioning and displacement, as well as for the anchoring of the locking system.

With respect to the damping system of the carriage and according to a further preferred solution to any of the above motorised or manual embodiments, this damping system comprises one or more bearing assemblies, wherein each bearing assembly has two bearing sub-assemblies that act on each side of the appreciably vertical surface of the guide element, each bearing sub-assembly having an elastic system for correcting the pressures received by the restraint system. This disposal of bearing sub-assemblies on one side and the other of the vertical surface maximises the benefits of the configuration of the guide element in the form of an open structural profile defined above so that it can maximise the simplicity of the configuration of the carriage and its displacement and damping elements.

Optionally, although preferred, the elastic system for correcting the pressures received by the restraint system is based on a damping system with strips, although in alternative embodiments it may use any conventional elastic damping system instead. This allows having an effective, simple and cost-effective damping system.

In order to stabilise and maintain the carriage in height, according to a preferred embodiment of the invention additional to any of the above, motorised or manual, the support and stabilisation system with bearing of the carriage comprises one or more bearings that occupy the width of the guide element. This makes it possible to support the carriage by means of a bearing element on the horizontal surface of the upper face of the upper flange of the guide element, maintaining the position and stability of the carriage in its displacement and in its restraining position, taking advantage of the entire width of the guide element as the upper flange conventionally has a width equal to the maximum width of the guide element.

Also preferably and in addition to the previous claims corresponding to the devices with hydraulic or electric motors, the chock device comprises an electronic control system that governs in an automated manner, at least, the actuation of each of said hydraulic or electric motors. This ensures that the chock is automated according to the operating parameters established in the control system, being able to perform, among others, remote or automated operations thanks to the installation of sensors or additional detection elements of the vehicle and the position of the carriage and the restraint system.

In this regard, in the motorised operation of the chock device, it is necessary to start from a position of the carriage that is not that of restraining the vehicle, so that the control system determines the action on an unlocking pedal of the locking system of the position of the carriage to release the anchoring of the carriage in that position and allow its movement in one direction or the other within the guide element.

The hydraulic or electric motor is activated so that the traction system performs its movement and advances in one direction or the other, according to the form of rotation that has been indicated by the control system to the first motor. The carriage exceeds, in the direction of exit from the loading and unloading dock, the wheel of the vehicle to be restrained and the action on the carriage position unlocking pedal is terminated.

At the moment the second motor corresponding to the restraint system acts, the control system again acts on the unlock pedal of the position locking system to allow the carriage to move to the correct position of the restraint arm on the vehicle wheel. In that correct position, the control system stops its action on the unlock pedal to fix the position of the carriage and its restraint system.

Specifically, in the case of using hydraulic motors, the solenoid valve block will regulate the hydraulic fluid input and output of each of the first and/or second motors, as well as the action of a piston on the carriage position unlocking pedal, as indicated.

Analogously, in the case of using electric motors, the control system will perform the movements by supplying continuous electric power and by means of linear actuators.

It should be noted that, although in these embodiments it is preferred to have the motorised traction system with its control system on a certain guide profile, this advantageous system could be used in guide elements of all kinds as long as they have a discrete positioning system on which to move in a motorised manner.

### Brief description of the drawings

For a better understanding of the description made herein, a set of drawings has been provided wherein, schematically and solely by way of a non-limiting example, a practical case of an embodiment is represented.
Figure 1 is a perspective view of the chock device to be installed in the loading dock area, with the carriage without casing to make its interior visible.
Figure 2 is a side elevational view of the chock device of figure 1.
Figure 3 is a cross-sectional view of the carriage with the restraint system in the extracted position.
Figure 4 is a longitudinal sectional view of the carriage.

### Description of a preferred embodiment

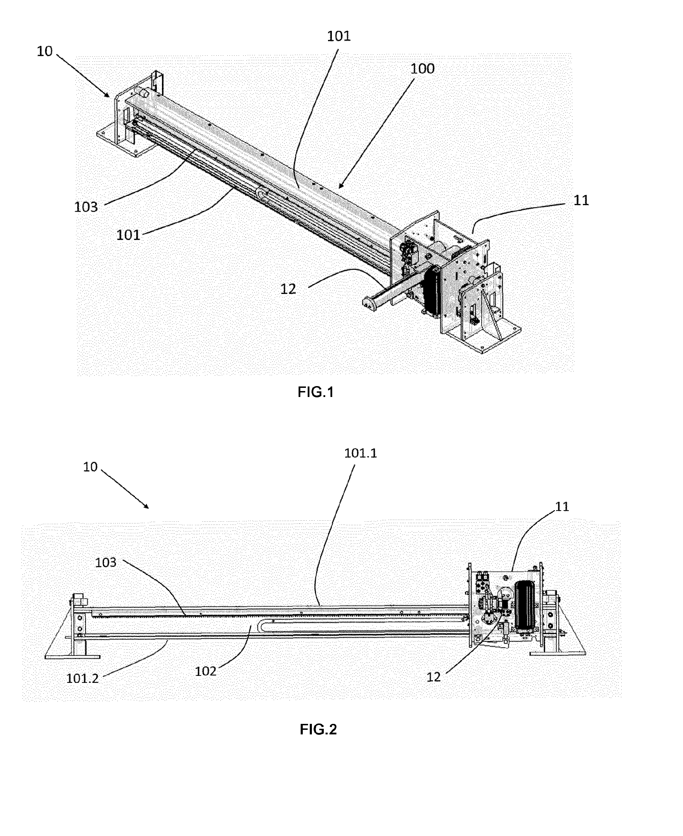

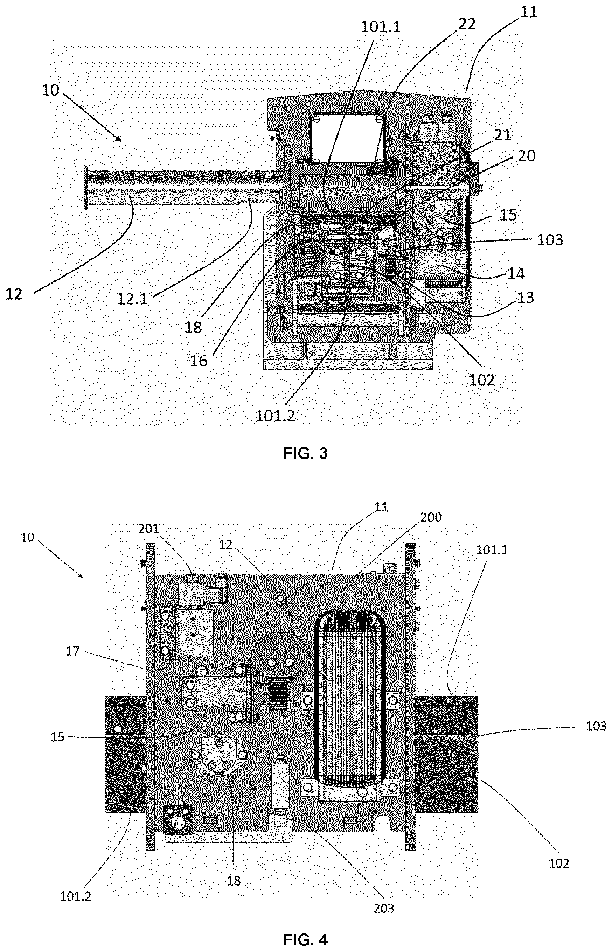

In one of the preferred embodiments of the invention, as shown in figures 1 to 4, the chock device (10) is configured to be installed in a loading and unloading dock or the like, not shown in the figures, on a appreciably horizontal surface as a guide in the approach and parking process of a loading vehicle or trailer, not shown in the figures, and thus restrain it in said parking position for the effective loading/unloading thereof.

The chock device (10) is configured, in the present preferred embodiment, so that it comprises a guide element (100) fixed to the installation surface by auxiliary elements at its ends that allow a certain raised position of said guide element (100) on said installation surface. On said guide element (100) there is a carriage (11) that moves along it (100), said carriage having a restraint system (12), in this embodiment in the form of a plunger, which can be extracted for locking the position of the vehicle, from a retracted position that does not interact with said vehicle to be restrained, allowing the movement of the carriage (11) without encountering obstacles until it is positioned in the effective location to extract the restraint system (12) and lock the vehicle.

The guide element (100) is formed in the present embodiment by an open metal profile of structural type, as is the case shown in the figures of a profile of the HEB-200 type, although other types of metal profiles are possible as has been described, such as profiles such as IPN, IPE, HEA, U, etc., wherein, preferably, these are of an open configuration and, at least, have two flanges in a horizontal position with their corresponding appreciably horizontal outer surfaces (101), an upper one (101.1) and a lower one (101.2) with their corresponding inner faces and two appreciably vertical surfaces (102) corresponding to the two faces of the web of the structural open metal profile that joins these two flanges of the structural open metal profile with their corresponding appreciably horizontal outer surfaces (101).

In the guide element (100) a discrete positioning and displacement system (103) of the carriage (11) is integrally fixed comprising, in the present embodiment, a toothing on which the carriage couples a traction element (13) fixed thereto (11). This traction element (13) is formed by a complementary pinion or toothed wheel, in the form of a rack assembly. Alternatively, other elements of the discrete positioning and displacement system and of the traction element that allow their collaboration and a fine regulation of the advance of the position of the carriage, are possible.

The traction element (13) is actuated by a first reversible hydraulic motor (14) connected to a solenoid valve block (201) that manages the hydraulic fluid from a hydraulic assembly (200), transmitting the rotary movement of the hydraulic motor shaft to the pinion or toothed wheel achieving a displacement of the carriage (11) in one or the other direction of displacement in the discrete positioning and displacement system (103). Alternatively, the first hydraulic motor (14) can be replaced by a reversible electric motor, which by its very configuration, with the exception of the hydraulic assembly and the solenoid valve block that are not used, has not been specifically represented in the figures.

When the carriage (11) is in a position wherein the extraction of the restraint system (12) would allow the effective locking of the position of the vehicle by interposing in the exit movement any of the wheels of said vehicle, a second hydraulic motor (15) drives the restraint system (12) extracting the plunger which is initially in its retracted position, interposing itself in the path of the wheel of the vehicle to be restrained. The control system actuates a locking element (16) that fixes the position of the carriage so that it cannot move while it has said plunger extracted and in the vehicle restraining position and an unlocking system is not actuated. This locking element (16), in the present preferred embodiment, is configured by way of a part that fits into a discrete fastening system (18), by way of a rack, disposed independently of the discrete positioning and displacement system (103) of the carriage (11). Alternatively, the part that fits into the discrete positioning and displacement system (103) of the carriage (11). Unlocking is performed by the action on the pedal (203) that releases the part from the locking element (16).

The movement of the restraint system (12) is performed by the action of the second hydraulic motor (15) on a second traction element (17), formed by a pinion or toothed wheel that engages on a toothed surface of the plunger, performing its movement in the direction of extraction or retraction.

This second motor (15), as well as the first motor (14), can be replaced by an electric motor governed by the control system, not shown in the figures.

In the position of extraction of the plunger that forms the restraint system (12), it is locked in said position so that it does not retract involuntarily, thanks to an electromagnetic bolt that allows a bolt-like pin to be inserted into an opening or slot of the plunger when the extracted position is detected and is only released when the order is given for the completion of the charging and discharging process or when there is a lack of electrical supply to the chock device (10).

The carriage (11) has a damping system that moves with the same carriage (11) and that acts on the vertical surface (102) of the guide element (100). This damping system is based on two bearing assemblies (21), although the number of bearing assemblies may alternatively be 1 or more than 2, wherein each bearing assembly has two bearing sub-assemblies located in the same plane beside and beside the appreciably vertical surface (102) of the guide element (100), each bearing sub-assembly having an elastic system for correcting the pressures received by the restraining system (12) and which are transmitted to the carriage (11). This elastic system, in the preferred embodiment of the invention, is a system of strips between bearings on the same side of the web of the structural open metal profile.

Also for the stability of the carriage (11), it has an upper support bearing (22), which rests on the upper horizontal surface (101.1) of the guide element (100), favouring its correct position in height of the carriage, without being sunk by external forces on the restraint system (12).

The chock device (10) of the invention is configured with an electronic control system, not shown in the figures, which is configured to regulate the actuation of the motors (14,15) both of movement of the carriage (11) and of movement of the restraint system (12). This control system can be completed with sensors/detectors that allow to know the positioning of the carriage (11) and/or the restraint system (12), as well as the vehicle and its wheels, in order to automate the positioning process of the carriage (11).

Alternatively to the previous embodiments, sharing the configuration of the carriage (11) with restraint system (12) on a guide element (100) formed by a metal profile that can be of open type of structural type, the carriage (11), without modifying further parts of the device, dispenses with motorised drives, its operation being manual, both of the displacement of the carriage (11) and of the restraint system (12). This manual configuration may include the same embodiments with respect to the damping, support, discrete positioning and displacement system, as well as the discrete fixing system.

Although reference has been made to a specific embodiment of the invention, it is evident to a person skilled in the art that the chock device for vehicles and trailers in loading and unloading docks described herein is susceptible to numerous variations and modifications, and that all the aforementioned details can be replaced by other technically equivalent details, without departing from the scope of protection defined by the attached claims.

## Claims

1. **CHOCK DEVICE FOR VEHICLES AND TRAILERS IN LOADING AND UNLOADING DOCKS,** which comprises a carriage (11) that moves along a guide element (100), which is installed in said loading and unloading docks, wherein the carriage (11) comprises an arm-like restraint system (12) that is configured so that it passes from a retracted position of non-interaction with the vehicle to be restrained to an extracted position that is interposed in the path of said vehicle to be restrained, locking the movement of the vehicles in their loading and unloading position, **characterised in that** the chock device (10) is formed by the carriage (11) configured to be displaced on the guide element (100) of the chock device (10), wherein the guide element (100) is formed by a metal profile,
wherein, on the metal profile forming the guide element (100) a discrete positioning and displacement system (103) of the carriage (11) is installed comprising a toothed, threaded, rack or the like of fine adjustment, wherein the carriage (11) has a displacement system (13), complementary to the discrete positioning and displacement system (103), which is configured to advance or retreat on said discrete positioning and displacement system (103), having a system for locking the position of the carriage on the discrete positioning and displacement system (103);
wherein the carriage (11) comprises a damping system (20) displaceable with the same carriage (11) acting in a damped manner on the at least one appreciably vertical surface (102) of the metal profile of the guide element (100); and
wherein the carriage (11) comprises a bearing support and stabilisation system (22) on at least one of the horizontal surfaces (101) of the open metal profile of structural type.

2. **CHOCK DEVICE FOR VEHICLES AND TRAILERS IN LOADING AND UNLOADING DOCKS,** according to claim 1, wherein the metal profile of the guide element (100) is an open profile of structural type comprising two flanges with appreciably horizontal surfaces (101,101'), by way of horizontal outer or inner faces of the open metal profile of structural type, separated by a single vertical element (102) by way of a web of the open metal profile of structural type, with both accessible faces of said web of the vertical element, wherein this web of the vertical element (102) joins the appreciably horizontal surfaces (101,101') of the two horizontal flanges of the profile.

3. **CHOCK DEVICE FOR VEHICLES AND TRAILERS IN LOADING AND UNLOADING DOCKS,** according to claim 1 or 2, wherein the carriage (11) is configured to be manually displaced by the discrete positioning system (103).

4. **CHOCK DEVICE FOR VEHICLES AND TRAILERS IN LOADING AND UNLOADING DOCKS,** according to claim 1 or 2, wherein the displacement system (13) of the carriage (11) comprises a traction element in complementary collaboration with the discrete positioning and displacement system (103), which is configured to advance or retreat on said discrete positioning and displacement system (103) by means of a first reversible hydraulic motor (14).

5. **CHOCK DEVICE FOR VEHICLES AND TRAILERS IN LOADING AND UNLOADING DOCKS,** according to claim 1 or 2, wherein the displacement system (13) of the carriage comprises a traction element in complementary collaboration with the discrete positioning and displacement system (103), which is configured to advance or retreat on said discrete positioning and displacement system (103) by means of a first reversible electric motor (14').

6. **CHOCK DEVICE FOR VEHICLES AND TRAILERS IN LOADING AND UNLOADING DOCKS,** according to any one of claims 1 to 5, wherein the movement of the restraint system (12) between the retracted and extracted positions is performed by a second motor (15) of reversible hydraulic type or of reversible electrical type.

7. **CHOCK DEVICE FOR VEHICLES AND TRAILERS IN LOADING AND UNLOADING DOCKS,** according to any one of claims 1 to 5, wherein the displacement of the restraint system (12) between the retracted and extracted positions is configured to be performed manually.

8. **CHOCK DEVICE FOR VEHICLES AND TRAILERS IN LOADING AND UNLOADING DOCKS,** according to any of the preceding claims, wherein the restraint system (12) comprises a locking element of the position extracted therefrom (12) based on an electromagnetic bolt configured to fit in a slot or opening of the restraint system (12).

9. **CHOCK DEVICE FOR VEHICLES AND TRAILERS IN LOADING AND UNLOADING DOCKS,** according to any of claims 4 or 6, wherein the chock device for comprises a hydraulic assembly that feeds hydraulic fluid to a solenoid valve block configured to supply hydraulic fluid to the first and/or second reversible hydraulic motor (14,15), according to operating configuration parameters of the control system.

10. **CHOCK DEVICE FOR VEHICLES AND TRAILERS IN LOADING AND UNLOADING DOCKS,** according to any of the preceding claims, wherein the carriage (11) comprises a locking element (16) of the position of the carriage (11), which is configured by way of a pedal that fits into a discrete fixing system (18), by way of a rack, disposed independently of the discrete positioning and displacement system (103) of the carriage (11) and which is configured to be anchored in this discrete fixing system (18) preventing the displacement of the carriage (11) at least in the direction of exit of the vehicle it restrains.

11. **CHOCK DEVICE FOR VEHICLES AND TRAILERS IN LOADING AND UNLOADING DOCKS,** according to any of the preceding claims, wherein the carriage (11) comprises a locking element (16) of the position of the carriage (11) which is configured as a pedal that fits into the discrete positioning and displacement system (103) of the carriage (11) and which is configured to be anchored in this discrete positioning and displacement system (103) preventing the displacement of the carriage (11) at least in the direction of exit of the restrained vehicle.

12. **CHOCK DEVICE FOR VEHICLES AND TRAILERS IN LOADING AND UNLOADING DOCKS,** according to any of the preceding claims, wherein the damping system (20) comprises one or more bearing assemblies (21), wherein each bearing assembly has two bearing sub-assemblies acting on each side of the appreciably vertical surface (102) of the guide element (100), each bearing sub-assembly having an elastic system for correcting the pressures received by the restraint system (12).

13. **CHOCK DEVICE FOR VEHICLES AND TRAILERS IN LOADING AND UNLOADING DOCKS,** according to any of the previous claims, wherein the bearing support and stabilisation system (22), comprises one or more bearings that occupy the width of the guide element (100).

14. **CHOCK DEVICE FOR VEHICLES AND TRAILERS IN LOADING AND UNLOADING DOCKS,** according to any of claims 4 to 7 and 8 to 13, wherein the chock device (10) comprises an electronic control system that governs, in an automated manner, at least the actuation of each of the hydraulic (14,15) or electric motors (14',15') and is configured to release the actuation of the locking system (18) prior to the displacement of the carriage (11) by the discrete positioning and displacement system (103).

15. **CHOCK DEVICE FOR VEHICLES AND TRAILERS IN LOADING AND UNLOADING DOCKS,** according to claim 14 when it depends on claim 9, wherein the electronic control system acts on a solenoid valve block, the control system being configured so that its action on the solenoid valve block will regulate the hydraulic fluid in and out of each of the first and/or second reversible hydraulic motors, as well as the action of a piston on the unlock pedal of the carriage position.
